(19) **Europäisches Patentamt**
**European Patent Office**
**Office européen des brevets**

(11) **EP 4 664 742 A1**

(12) **EUROPEAN PATENT APPLICATION**

(43) Date of publication:
**17.12.2025 Bulletin 2025/51**

(21) Application number: **25182041.1**

(22) Date of filing: **11.06.2025**

(51) International Patent Classification (IPC):
**H02M 1/36** (2007.01)    **H02M 3/00** (2006.01)
**H02M 3/335** (2006.01)    **H02M 7/483** (2007.01)

(52) Cooperative Patent Classification (CPC):
**H02M 3/01; H02M 1/36; H02M 3/33573;**
**H02M 3/33584; H02M 7/4833**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **13.06.2024 US 202463659538 P**

(71) Applicant: **Delta Electronics, Inc.**
**Neihu, Taipei 11491 (TW)**

(72) Inventors:
• **Phukan, Ripun**
**Morrisville, NC, 27560 (US)**
• **Kumar, Misha**
**Morrisville, NC, 27560 (US)**
• **Barbosa, Peter Mantovanelli**
**Morrisville, NC, 27560 (US)**

(74) Representative: **Uexküll & Stolberg**
**Partnerschaft von**
**Patent- und Rechtsanwälten mbB**
**Beselerstraße 4**
**22607 Hamburg (DE)**

(54) **CONVERTER SYSTEM AND CONTROL METHOD THEREOF**

(57)    The present disclosure provides a control method of a converter system (1, 1a). The control method includes steps of: (a) performing a soft start control by the controller (5) until a voltage ($V_{CB1}$) of the blocking capacitor ($C_{B1}$) reaches half of a voltage of the DC voltage source ($V_{dc}$); (b) performing an output current control loop and a voltage balancing loop for obtaining a first phase shift (Ø) and a second phase shift (ΔØ) by the controller (5); and (c) utilizing the first phase shift (Ø) and the second phase shift (AØ) for controlling the plurality of inverter switches ($S_{1,inv}$, $S_{2,inv}$, $S_{3,inv}$, $S_{4,inv}$) and the plurality of rectifier switches ($S_{1,rec}$, $S_{2,rec}$, $S_{3,rec}$, $S_{4,rec}$).

**EP 4 664 742 A1**

FIG. 6A

**Description**

FIELD OF THE APPLICATION

The present disclosure relates to a converter system and a control method thereof, and more particularly to a universal wide range LCL-T resonant converter system and a control method thereof.

BACKGROUND OF THE APPLICATION

With the advent of wide band gap semiconductors, high frequency operation of power supplies is becoming increasingly popular leading to reduction of passive component volume and resulting in high power density converters while keeping the converter efficiency high. Conventionally, variable frequency controlled resonant converters, such as LLC resonant converters, are a commonplace and standardized for charging applications due to their ability to achieve full range zero voltage switching (ZVS) and zero current switching (ZCS) near the resonant point, thereby yielding high efficiency designs. However, the control of standard LLC resonant converter is challenging, particularly start-up mode, which requires high switching frequency variations to control the voltage gain.

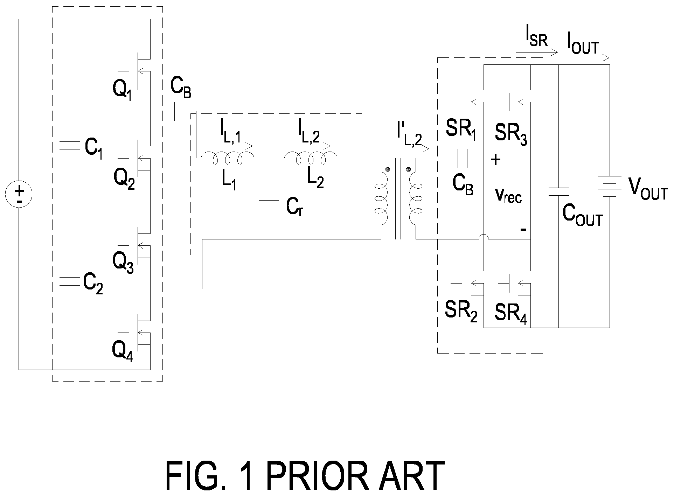

FIG. 1A shows the conventional LCL-T resonant converter with a stacked half-bridge inverter and a full-bridge rectifier. The stacked half-bridge inverter meets the wide input voltage requirement with each device blocking half of the input voltage $V_{IN}$. The rectifier is shown in a standard full bridge configuration where each device needs to block full output voltage $V_{OUT}$. Between the two ends, lies a "T"-type resonant network formed by inductors $L_1$, $L_2$, and capacitor $C_r$. It should be noted that there are additional blocking capacitors in the circuit diagram marked as $C_B$, which provide DC blocking functionality, due to presence of SHB inverter, but does not participate in the resonance operation, since their value is much larger than capacitor $C_r$. This resonant converter falls under a special class of immittance resonant converters. The fundamental harmonic analysis can be applied to the inverter and rectifier configuration. In this three-element resonant network, there is only one resonant frequency, and the switching frequency of the converter is set to be equal to the resonant frequency.

$$f_r = f_s = \frac{1}{2\pi\sqrt{C_r L}}; \ L_1 = L_2 = L \tag{1}$$

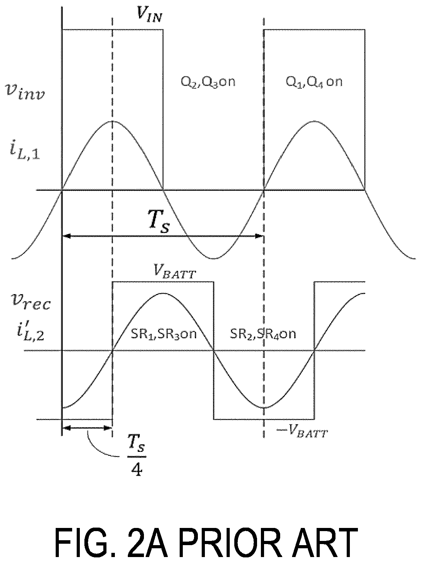

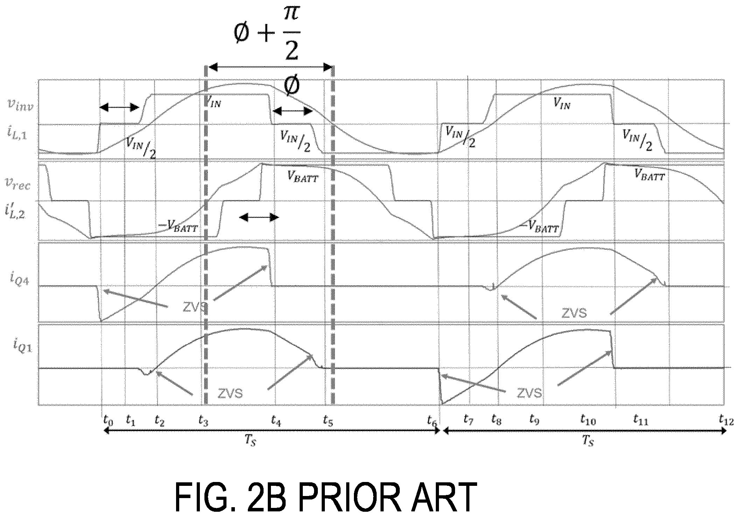

These resonant networks, when designed according to equation (1), can provide fixed voltage to current gain suitable for battery charging applications using a constant current power supply. Fixed frequency control methods utilizing phase-shift between inverter and rectifier bridges have been discussed in prior literature for immittance networks. To maintain zero voltage switching (ZVS) turn-on of primary and secondary sides, active rectification was disclosed. The fundamental operating waveforms for the LCL-T resonant converter are provided in FIGS. 2A and 2B.

Additionally, implementing a stacked half bridge on the primary side imposes balancing constraint for the input capacitors which was discussed, mainly for the LLC resonant converter. The period doubling modulation was introduced as such, to naturally balance the DC link capacitors. However, the period doubling scheme was found to be insufficient to balance the DC link capacitor voltages due to asymmetry in converter operation and inherent non-idealities in PWM sequence. In addition, the period doubling modulation is recommended only for steady state operation. As such additional control effort was deemed necessary to balance the DC link capacitor voltages during transient modes.

While the steady state control is disclosed in prior art, during start-up, as the initial voltage across the blocking capacitor is zero, a high inrush current is produced at the input of the converter which will exceed the device safe operating area (SoA) curves if there is no start-up control. This eventually results in potential damage of the inverter end device. Therefore, a start-up control strategy is necessary to manage the high inrush currents.

Therefore, there is a need to provide a converter system and a control method thereof to obviate the drawbacks encountered from the prior arts. Particularly the focus of this application includes but not limit to active DC bus voltage balancing and start-up strategies for immittance based converters. In addition, a control method is proposed to safely operate the converter with full system functionality.

SUMMARY OF THE APPLICATION

It is an object of the present disclosure to provide a converter system and a control method thereof, in the present disclosure, the soft start of a resonant converter is provided. Specifically, a soft-start strategy is disclosed that avoids inrush current and transformer saturation during power up phase.

In one embodiment of the present disclosure, the control feature of soft start control for LCL-T resonant converter is deemed essential to pre-charge the bulk output DC link capacitors prior to battery connection using external relay.

In accordance with one aspect of the present disclosure, there is provided a converter system. The converter system is configured for delivering energy from a DC voltage source to a load and includes an inverter, a first capacitor, a second capacitor, a circuit, a blocking capacitor, a rectifier, an output capacitor and a controller. The inverter includes a plurality of inverter switches, a voltage source terminal for connecting to the DC voltage source, and an inverter output terminal. The plurality of inverter switches includes a first switch, a second switch, a third switch and a fourth switch electrically connected in series. The inverter has a first node between the first switch and the second switch, a second node between the third switch and the fourth switch, and a third node between the second switch and the third switch. The first capacitor and the second capacitor are electrically connected in series to form a bridge arm electrically connected in parallel to the inverter, and a fourth node between the first capacitor and the second capacitor is electrically connected to the third node. An upper capacitor voltage is across the first capacitor, and a lower capacitor voltage is across the second capacitor. The circuit includes a resonant network and a transformer electrically connected to each other and is electrically connected to the inverter output terminal. The blocking capacitor is electrically connected between the inverter and the resonant network. The rectifier is electrically connected to the circuit, the rectifier includes a plurality of rectifier switches and a converter output terminal, and a battery input current flows through the converter output terminal. The output capacitor is electrically connected in parallel to the rectifier. The controller is operably connected to the plurality of inverter switches and is operably connected to the plurality of rectifier switches. The controller is configured to perform an output current control loop and a voltage balancing loop of the converter system. The controller is configured to generate a first phase shift based on the battery input current in the output current control loop, and the controller is configured to generate a second phase shift based on the upper and lower capacitor voltages in the voltage balancing loop. The controller is configured to control the control signals of the first switch and the fourth switch to be phase-shifted by a summation or a difference of the first phase shift and the second phase shift. The controller is configured for performing a soft start control of the converter system, and in the soft start control, a voltage of the blocking capacitor is controlled to be from zero to half of an input voltage of the converter system.

In accordance with another aspect of the present disclosure, there is provided a converter system. The converter system is configured for delivering energy from a DC voltage source to a load and includes an inverter, a first capacitor, a second capacitor, a circuit, a blocking capacitor, a rectifier, an output capacitor and a controller. The inverter includes a plurality of inverter switches, a voltage source terminal for connecting to the DC voltage source, and an inverter output terminal. The plurality of inverter switches includes a first switch, a second switch, a third switch and a fourth switch electrically connected in series. The inverter has a first node between the first switch and the second switch, a second node between the third switch and the fourth switch, and a third node between the second switch and the third switch. The first capacitor and the second capacitor are electrically connected in series to form a bridge arm electrically connected in parallel to the inverter, and a fourth node between the first capacitor and the second capacitor is electrically connected to the third node. An upper capacitor voltage is across the first capacitor, and a lower capacitor voltage is across the second capacitor. The circuit includes a resonant network and a transformer electrically connected to each other and is electrically connected to the inverter output terminal. The blocking capacitor is electrically connected between the inverter and the resonant network. The rectifier is electrically connected to the circuit, the rectifier includes a plurality of rectifier switches and a converter output terminal. The output capacitor is electrically connected in parallel to the rectifier. The controller is operably connected to the plurality of inverter switches and is operably connected to the plurality of rectifier switches. The controller is configured for performing a soft start control of the converter system, and in the soft start control, a voltage of the blocking capacitor is controlled to be half of an input voltage of the converter system.

In accordance with another aspect of the present disclosure, there is provided a control method of the converter system of the present disclosure. The control method includes steps of: (a) performing a soft start control by the controller until a voltage of the blocking capacitor reaches half of a voltage of the DC voltage source; (b) performing an output current control loop and a voltage balancing loop for obtaining a first phase shift and a second phase shift by the controller; and (c) utilizing the first phase shift and the second phase shift for controlling the plurality of inverter switches and the plurality of rectifier switches.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 schematically shows a conventional resonant converter including an LCL-T resonant network and a high frequency isolation transformer with stacked half bridge (SHB) based multi-level configuration on the inverter side and a full bridge (FB) rectifier as the secondary side;
FIGS. 2A and 2B schematically show the inverter and rectifier operation waveforms of the converter of FIG. 1 with phase shifted modulation scheme (multi-level inverter switching and synchronous rectification), wherein the output power and output current in the LCL-T resonant converter of FIG. 1 is regulated using three-level modulation of the inverter circuit;

FIGS. 3A and 3B schematically show a conventional multi-port converter where pulse skipping control is implemented;

FIG. 4 schematically shows an operation waveform for two-level to three-level gating sequence transition for switching control of a conventional converter;

FIG. 5 schematically shows the conventional converter with stacked half bridge converter architecture wherein the two-level and three-level modulation of FIG. 4 are implemented;

FIG. 6A schematically shows a converter system according to an embodiment of the present disclosure;

FIG. 6B schematically shows a closed loop control architecture of the controller of the converter system of FIG. 6A according to an embodiment of the present disclosure;

FIG. 7 schematically shows waveforms of a balancing implementation of the converter system of FIG. 6A;

FIG. 8A schematically shows a converter system according to another embodiment of the present disclosure;

FIGS. 8B and 8C show an embodiment of the proposed technique of FIG. 8A where a second phase shift $\Delta\emptyset$ is needed to balance the capacitor voltages;

FIG. 8D schematically shows a waveform of the converter system of FIG.8A indicating the performance effectiveness of the proposed adjustment in FIGS. 8B and 8C;

FIGS. 9A and 9B schematically show waveforms of soft start control with first approach and second approach respectively for the converter system of FIG. 6A;

FIG. 9C schematically shows the sequence of events through a detailed timing diagram for the second approach of the FIG. 9B; and

FIG. 10 is a schematic flow chart illustrating a control method of a converter system according to an embodiment of the present disclosure.

## DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

FIG. 1 schematically shows a conventional resonant converter including an LCL-T resonant network and a high frequency isolation transformer with stacked half bridge (SHB) based multi-level configuration on the inverter side and full bridge (FB) rectifier as the secondary side. The high frequency inverter includes two stacked half bridges. The two stacked half bridges generate an inverter voltage $v_{inv}$ at the input of the resonant tank. In the resonant tank, two inductors $L_1$ and $L_2$ are resonate with capacitor $C_r$ at the switching frequency $f_s$ shown as equation (2):

$$f_s = \frac{1}{2\pi\sqrt{L_1 C_r}} = \frac{1}{2\pi\sqrt{L_2 C_r}} \qquad (2)$$

Under steady state, variable phase shift control at fixed switching frequency is used to regulate the output power. However, additional control efforts are mandated to fully control this immittance based resonant converter. As part of the implemented control schemes, prior art is referred.

FIGS. 2A and 2B schematically show the inverter and rectifier operation waveforms of the converter of FIG. 1. FIG. 2A shows the inverter voltage $v_{inv}$, the inductor current $i_{L,1}$ of the inductor $L_1$, which can also be referred to as the inverter side inductor current, the inductor current $i'_{L,2}$ of the inductor $L_2$, which can also be referred to as the primary reflected rectifier side inductor current, and rectifier voltage $v_{rec}$ under synchronous rectification. Since the resonant tank offers resistive impedance, the zero crossing of the inductor currents overlaps with the switching node voltages.

The inductor current $i'_{L,2}$ has a constant time delay of $\dfrac{T_s}{4}$ or $\dfrac{\pi}{2}$ compared to inverter side voltage and current. It should be noted that the angle $\emptyset$ primarily controls the output current by changing the equivalent inverter voltage $v_{inv}$. In the embodiment, for complete ZVS condition, the inverter current should lag the inverter voltage by an additional angle hereby referred to as $\dfrac{\emptyset}{2}$. Therefore, the phase shift between inverter and rectifier voltages should be $\dfrac{\pi}{2} + \emptyset$ that guarantees the ZVS condition on both primary and secondary sides.

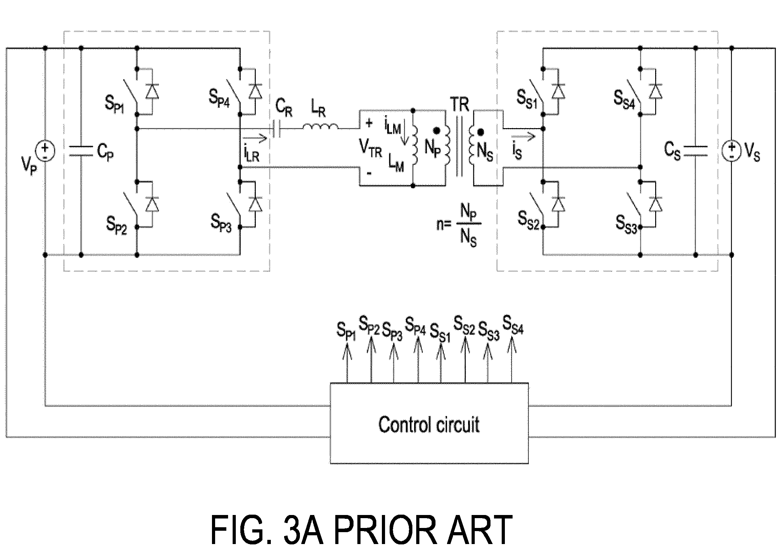

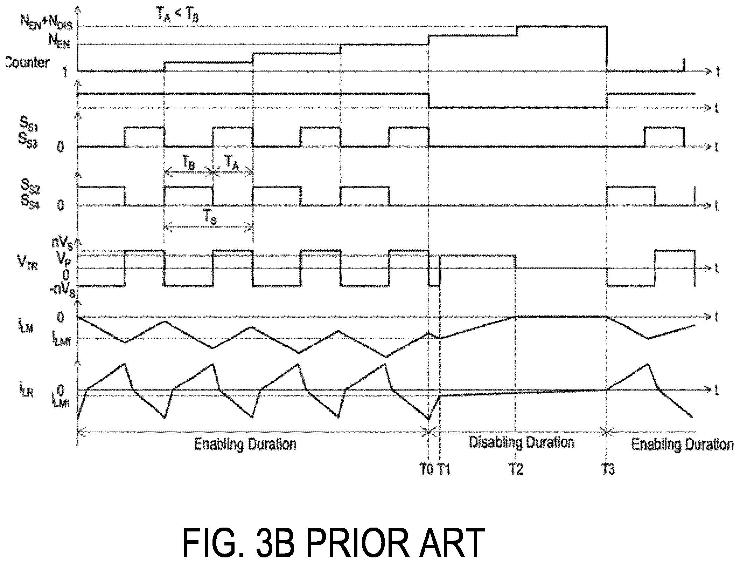

FIGS. 3A and 3B schematically show a conventional multi-port converter where pulse skipping control is implemented. The converter shown in FIG. 3A is a series resonant converter (SRC). As a segment of the control scheme, pulse skipping method is used for soft-start of the LCL-T resonant converter.

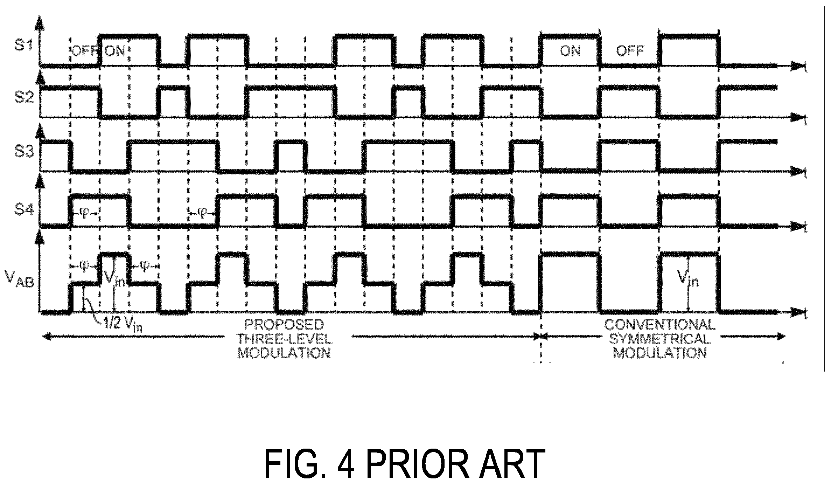

FIG. 4 schematically shows an operation waveform for two-level to three-level gating sequence transition for switching control of a conventional converter, wherein the converter is a stacked half bridge converter. As a segment of the control scheme, two-level to three-level gating sequence transition is implemented.

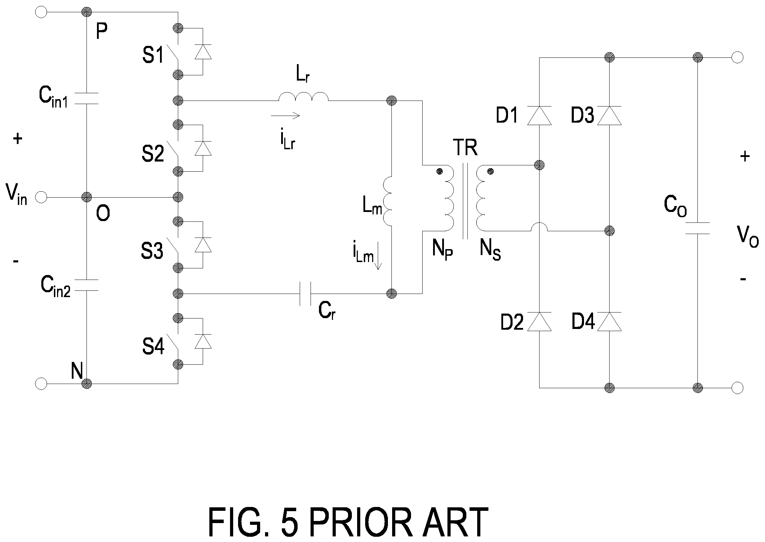

FIG. 5 schematically shows the conventional converter with stacked half bridge converter architecture wherein the two-level and three-level modulation of FIG. 4 are implemented.

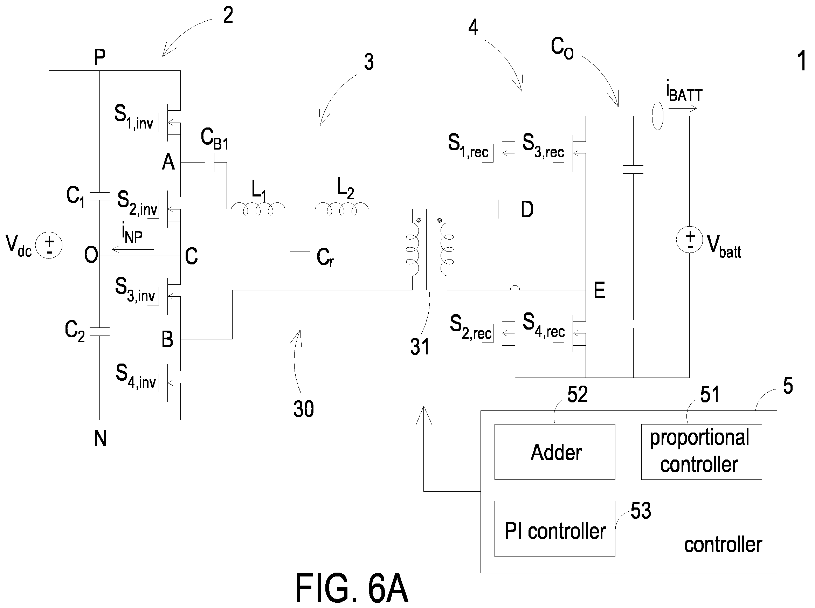

FIG. 6A schematically shows a converter system 1 according to an embodiment of the present disclosure. As shown in FIG. 6A, the converter system 1 for delivering energy from a DC voltage source $V_{dc}$ to a load Vbatt is disclosed. The converter system 1 includes an inverter 2, a circuit 3, a rectifier 4, and a controller 5. The inverter 2 has a plurality of inverter switches $S_{1,inv}$, $S_{2,inv}$, $S_{3,inv}$, and $S_{4,inv}$, the inverter 2 includes a voltage source terminal for connecting to the DC voltage source $V_{dc}$ and an inverter output terminal. In this embodiment, the inverter 2 of the converter system 1 includes a stacked half bridge (SHB) inverter with the inverter switches $S_{1,inv}$, $S_{2,inv}$, $S_{3,inv}$ and $S_{4,inv}$ electrically connected in series. There is a first node A between the inverter switch $S_{1,inv}$ and the inverter switch $S_{2,inv}$, there is a second node B between the inverter switch $S_{3,inv}$ and the inverter switch $S_{4,inv}$, and there is a third node C between the inverter switch $S_{2,inv}$ and the inverter switch $S_{3,inv}$. The voltage across the first node A and the second node B is an inverter output voltage $V_{inv}$. There is a first capacitor C1 and a second capacitor C2 electrically connected in parallel to the inverter 2. The first capacitor C1 and the second capacitor C2 are electrically connected in series, there is a fourth node O between the first capacitor C1 and the second capacitor C2, and the fourth node O is electrically connected to the third node C between the inverter switch $S_{2,inv}$ and the inverter switch $S_{3,inv}$. In addition, there is a fifth node P between the inverter switch $S_{1,inv}$ and the first capacitor C1, and there is a sixth node N between the inverter switch $S_{4,inv}$ and the second capacitor C2. The fifth node P and the sixth node N are electrically connected to two ends of the DC voltage source $V_{dc}$ respectively. The voltage across the first capacitor C1 is an upper capacitor voltage $V_{PO}$, and the voltage across the second capacitor C2 is a lower capacitor voltage $V_{ON}$. In an embodiment, an output capacitor Co is electrically connected in parallel to the rectifier 4, and the voltage across the output capacitor Co is Vo. The circuit 3 includes a resonant network 30 and a transformer 31 electrically connected to each other, the circuit 3 is electrically connected to the inverter output terminal of the inverter 2. The resonant network 30 includes a first inductor $L_1$, a second inductor $L_2$, and a capacitor $C_r$. The first inductor $L_1$ and the second inductor $L_2$ are electrically connected in series. A first end of the capacitor $C_r$ is electrically connected between a first end of the first inductor $L_1$ and a first end of the second inductor $L_2$, a second end of the capacitor $C_r$ is electrically connected to the second node B. Two ends of a primary winding of the transformer 31 are electrically connected to a second end of the second inductor $L_2$ and the second end of the capacitor $C_r$ respectively. There is a blocking capacitor $C_{B1}$ between the inverter 2 and the resonant network 30. In specific, two ends of the blocking capacitor $C_{B1}$ are electrically connected to the first node A and a second end of the first inductor $L_1$ of the resonant network 30 respectively. In the embodiment, the rectifier 4 is electrically connected to the circuit 3, the rectifier 4 includes a plurality of rectifier switches $S_{1,rec}$, $S_{2,rec}$, $S_{3,rec}$, and $S_{4,rec}$ and a converter output terminal. The rectifier 4 of the converter system 1 includes a full bridge (FB) rectifier with the rectifier switches $S_{1,rec}$ and $S_{2,rec}$ electrically connected in parallel to the rectifier switches $S_{3,rec}$ and $S_{4,rec}$. There is a seventh node D between the rectifier switch $S_{1,rec}$ and the rectifier switch $S_{2,rec}$, and there is an eighth node E between the rectifier switch $S_{3,rec}$ and the rectifier switch $S_{4,rec}$. The seventh node D and the eighth node E are electrically to two ends of a secondary winding of the transformer 31 of the circuit 3 respectively. The voltage across the seventh node D and the eighth node E is a rectifier output voltage $V_{rec}$. A battery input current $i_{BATT}$ is the current flows through the converter output terminal. The controller 4 is operably connected to the inverter switches $S_{1,inv}$, $S_{2,inv}$, $S_{3,inv}$, and $S_{4,inv}$ and is operably connected to the rectifier switches $S_{1,rec}$, $S_{2,rec}$, $S_{3,rec}$, and $S_{4,rec}$.

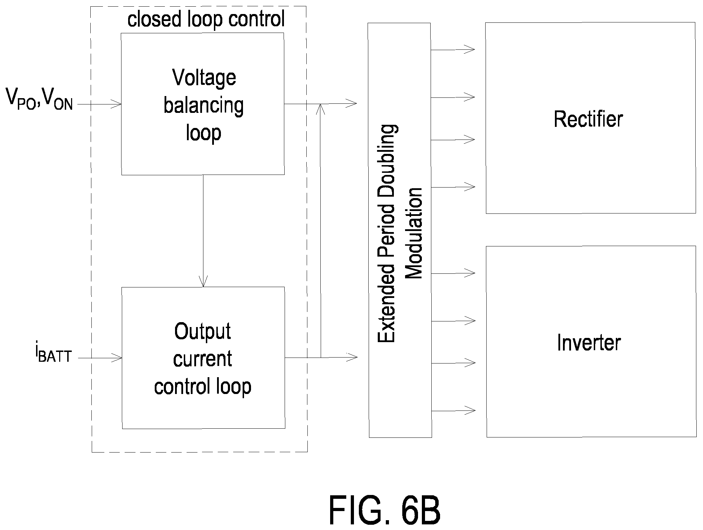

FIG. 6B summarizes the closed loop control architecture of the controller 5 of the converter system 1 shown in FIG. 6A. As shown in FIG. 6B, there are two primary features of the closed loop control architecture. The first feature includes a closed loop control. The second feature focuses on extended period doubling modulation.

In specific, the closed loop control of the converter system 1 includes an output current control loop and a voltage balancing loop, and the controller 5 of the converter system 1 is configured for performing the output current control loop and the voltage balancing loop of the converter system 1.

Please refer to FIGS. 6A and 6B, in the output current control loop, the battery input current $i_{BATT}$ is controlled. The controller 5 includes a proportional controller 51, an adder 52 and a proportional and integration (PI) controller 53. A reference battery current $i_{BATT, ref}$ and the battery input current $i_{BATT}$ are sensed and compared by the controller 5 to generate an error signal through the controller 5. The error signal is fed as an input to the PI controller 53 of the controller 5 which generates a first phase shift $\emptyset$. The first phase shift $\emptyset$ is the inner phase shift angle between the two phase legs of the full bridge converter $\{S_{1,inv}, S_{2,inv}\}$ and $\{S_{3,inv}, S_{4,inv}\}$.

In the voltage balancing loop, the upper and lower capacitor voltages $V_{PO}$ and $V_{ON}$ are controlled as inputs of the proportional controller 51 of the controller 5 of the converter system 1, and a second phase shift $\Delta\emptyset$ is generated utilizing the proportional controller 51 of the controller 5 according to the upper and lower capacitor voltages $V_{PO}$ and $V_{ON}$. The

second phase shift $\Delta\varnothing$ is the incremental phase shift added on top of the first phase shift $\varnothing$, to adjust the neutral point current injected into the capacitor mid-point. The second phase shift is the output of the DC bus voltage balancing loop.

The first and second phase shifts $\varnothing$ and $\Delta\varnothing$ are added to generate a total phase shift as $\varnothing + \Delta\varnothing$ through an adder 52 of the controller 5.

The total phase shift $\varnothing + \Delta\varnothing$ is fed as an input to an inverter PWM generation block of the controller 5 for generating inverter control signals, where the inverter control signals are configured for controlling the plurality of inverter switches $S_{1,inv}$, $S_{2,inv}$, $S_{3,inv}$, and $S_{4,inv}$. In addition, the first phase shift $\varnothing$ is fed to a rectifier PWM generation block of the controller 5 for generating rectifier control signals, where the rectifier control signals are configured for controlling the plurality of rectifier switches $S_{1,rec}$, $S_{2,rec}$, $S_{3,rec}$, and $S_{4,rec}$. In other words, the inverter and rectifier PWM generation blocks are configured for generating digital pulse signals for the plurality of inverter switches $S_{1,inv}$, $S_{2,inv}$, $S_{3,inv}$, and $S_{4,inv}$ and the plurality of rectifier switches $S_{1,rec}$, $S_{2,rec}$, $S_{3,rec}$, and $S_{4,rec}$ respectively.

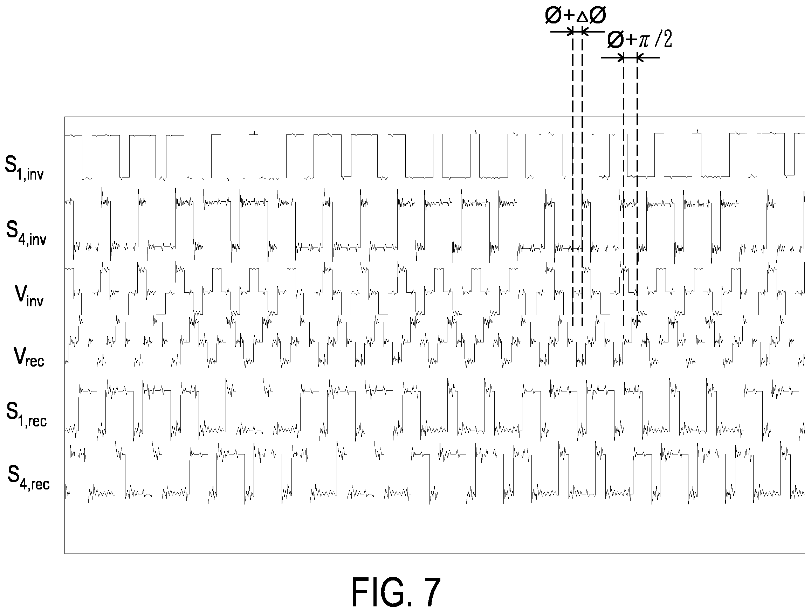

Before generating the real control signals for the plurality of inverter switches $S_{1,inv}$, $S_{2,inv}$, $S_{3,inv}$, and $S_{4,inv}$ and the plurality of rectifier switches $S_{1,rec}$, $S_{2,rec}$, $S_{3,rec}$, and $S_{4,rec}$, a period doubling modulation is implemented. Please refer to FIGS. 6B and 7. FIG. 7 shows the gating pulse sequence for control signals of inverter and rectifier switches with the extended period doubling modulation. The goal of period doubling modulation is to balance the inverter output voltage $V_{inv}$ and re-distribute the current stress in the plurality of inverter switches $S_{1,inv}$, $S_{2,inv}$, $S_{3,inv}$, and $S_{4,inv}$. To implement the period doubling modulation, the control signals of the inverter switches $S_{1,inv}$ and $S_{4,inv}$ can be phase shifted by the total phase shift of $(\varnothing + \Delta\varnothing)$ or $(\varnothing - \Delta\varnothing)$ obtained by the controller 5. For example, the control signals of the inverter switches $S_{1,inv}$ and $S_{4,inv}$ may be phase shifted by the total phase shift of $(\varnothing + \Delta\varnothing)$ when the voltage difference $\Delta V$, which equals $V_{PO}$-$V_{ON}$, is positive, and the control signals of the inverter switches $S_{1,inv}$ and $S_{4,inv}$ may be phase shifted by the total phase shift of $(\varnothing - \Delta\varnothing)$ when the voltage difference $\Delta V$ is negative. In the present embodiment of FIG. 7, the control signals of the inverter switches $S_{1,inv}$ and $S_{4,inv}$ are phase shifted by the total phase shift of $(\varnothing + \Delta\varnothing)$.

In one embodiment, the control signals of the inverter switches $S_{1,inv}$ and $S_{4,inv}$ are phase-shifted by a summation of the first phase shift $\varnothing$ and the second phase shift $\Delta\varnothing$ when the upper capacitor voltage $V_{PO}$ is greater than the lower capacitor voltage $V_{ON}$.

In one embodiment, the control signals of the inverter switches $S_{1,inv}$ and $S_{4,inv}$ are phase-shifted by a difference of the first phase shift $\varnothing$ and the second phase shift $\Delta\varnothing$ when the upper capacitor voltage $V_{PO}$ is less than the lower capacitor voltage $V_{ON}$.

In an embodiment, the control signals of the inverter switches $S_{1,inv}$ and $S_{4,inv}$ are phase-shifted by a summation of the first phase shift $\varnothing$ and the second phase shift $\Delta\varnothing$ when the upper capacitor voltage $V_{PO}$ is greater than the lower capacitor voltage $V_{ON}$; and/or the control signals of the inverter switches $S_{1,inv}$ and $S_{4,inv}$ are phase-shifted by a difference of the first phase shift $\varnothing$ and the second phase shift $\Delta\varnothing$ when the upper capacitor voltage $V_{PO}$ is less than the lower capacitor voltage $V_{ON}$.

The gating sequence for the control signal of the switch $S_{1,inv}$ and the control signal of the inverter switch $S_{4,inv}$ are alternating lead or lag to generate a three-level inverter voltage as the inverter output voltage $V_{inv}$. This modulation is referred as a period doubling modulation.

The modified control signals are fed as inputs to the modulator for the plurality of rectifier switches $S_{1,rec}$, $S_{2,rec}$, $S_{3,rec}$, and $S_{4,rec}$ and plurality of inverter switches $S_{1,inv}$, $S_{2,inv}$, $S_{3,inv}$, and $S_{4,inv}$. To ensure ZVS on the plurality of inverter switches $S_{1,inv}$, $S_{2,inv}$, $S_{3,inv}$, and $S_{4,inv}$ and the plurality of rectifier switches $S_{1,rec}$, $S_{2,rec}$, $S_{3,rec}$, and $S_{4,rec}$, the inverter output voltage $V_{inv}$ and the rectifier output voltage $V_{rec}$ are phase shifted by $\dfrac{\pi}{2} + \varnothing$ with respect to each other. The mentioned phase shifted is done by phase shifting the carrier wave of the rectifier 4 by $\dfrac{\pi}{2} + \varnothing$ with respect to the inverter 2.

In an embodiment, in order to allow a single CPU implementation, an extended period doubling modulation shown in FIG. 6B is proposed. Please refer to FIGS. 6B and 7, according to the extended period doubling modulation, while the control signal of the inverter switch $S_{1,inv}$ leads the control signal of the inverter switch $S_{4,inv}$ for the first few switching cycles. In this embodiment, three switching cycles is implemented as an example, but the actual number thereof is not limited. The control signal of the inverter switch $S_{1,inv}$ lags the control signal of the inverter switch $S_{4,inv}$ for the subsequent three cycles. In this embodiment, the switching frequency is selected to be 500 kHz as an example. This sequence keeps alternating every 6 us, i.e., three switching cycles. However, the inverter and rectifier output voltages $V_{inv}$ and $V_{rec}$ remain in synchronization throughout these two operating states of this sequence as seen from FIG. 7. A single CPU implementation necessitates the use of extended period doubling frequency of $nf_{SW}$, where $n$ is odd. In this embodiment, $n$ is equal to 3. Note that for the balancing strategy to work, $n$ must be odd since the phase shift update is done every odd cycles. Since the time constant for DC bus voltage balancing circuit is high, and the switching frequency itself is also high, the extended period doubling does not lead to any significant deviation in the upper capacitor voltage $V_{PO}$ and the lower capacitor voltage $V_{ON}$.

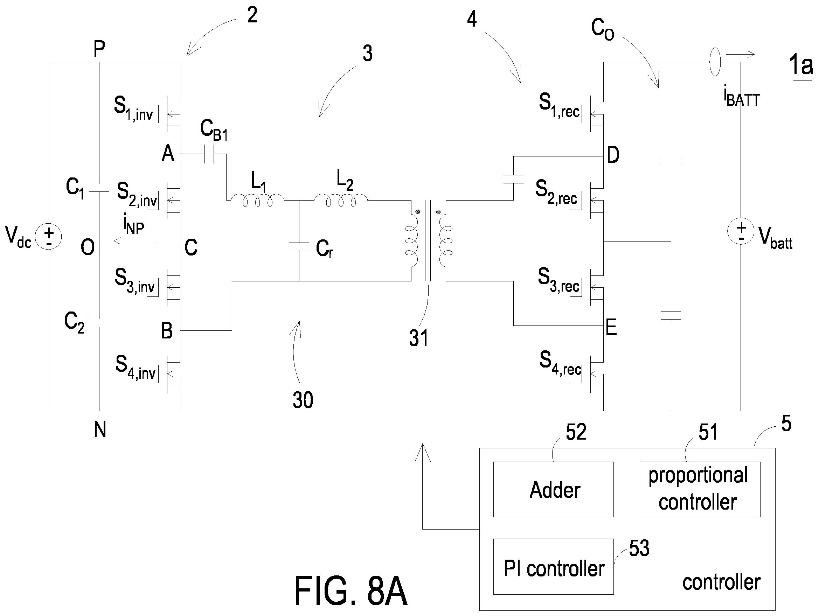

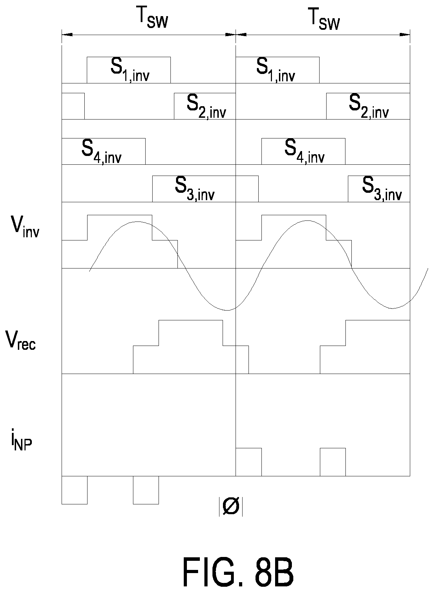

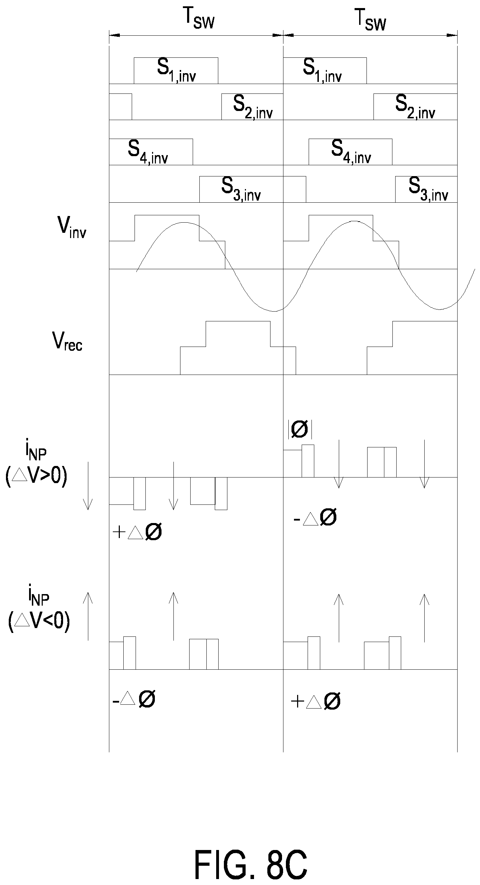

While the extended period doubling modulation is useful to balance the DC bus voltages under steady state, this may not be true in the embodiment of transients. As shown in FIGS. 8A, 8B and 8C. FIG. 8A schematically shows a converter system 1a according to another embodiment of the present disclosure. FIGS. 8B and 8C show the proposed technique of FIG. 8A where a second phase shift $\Delta\emptyset$ is needed to balance the upper and lower capacitor voltages $V_{PO}$ and $V_{ON}$. In this embodiment, the structures and operations of the converter system 1a shown in FIG. 8A are as described above, and the detailed descriptions thereof are omitted herein, the only different from the converter system 1 shown in FIG. 6A is that the rectifier 4 of the converter system 1a is a stacked half bridge (SHB) rectifier with rectifier switches $S_{1,rec}$ and $S_{2,rec}$, $S_{3,rec}$ and $S_{4,rec}$ electrically connected in series. A neutral point current $i_{NP}$ is the current flows from the third node C to the fourth node O. Ideally, as shown in FIG. 8B, the neutral point current $i_{NP}$ at the fourth node O is balanced every other cycle through the period doubling modulation, however active control over the neutral point current is necessary. As shown in FIG. 8C, it is possible to balance the upper and lower voltages $V_{PO}$ and $V_{ON}$, by knowing the states of neutral point current $i_{NP}$ during a switching cycle in the form of the voltage difference between the first and second capacitors C1 and C2. Accordingly, adjusting the phase shift displacement by the second phase shift $\Delta\emptyset$ can offset the capacitor voltage deviation.

In specific, please refer to FIG. 8C, the polarity of the signal injection ($\Delta\emptyset$), must be known prior depending on the polarity of the voltage difference i.e., the absolute value of the difference between the upper capacitor voltage $V_{PO}$ and the lower capacitor voltage $V_{ON}$. This is illustrated in FIG. 8C where at the same switching cycle, the polarity of the signal injection ($\Delta\emptyset$) depends on the voltage difference $\Delta V$.

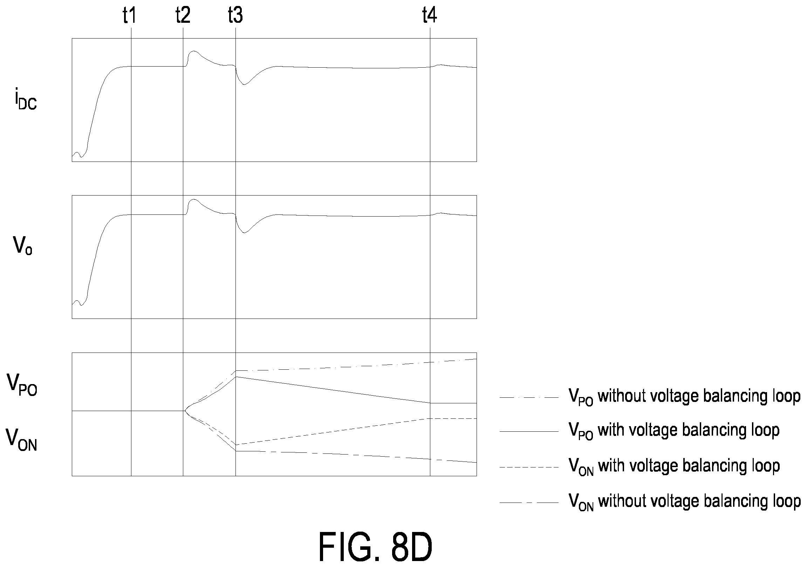

FIG. 8D schematically shows a waveform of FIG. 8A indicating the performance effectiveness of the proposed adjustment in FIGS. 8B and 8C. In FIG. 8D, $i_{DC}$ represents the current provided by the power source, and the waveforms of the upper capacitor voltage $V_{PO}$ and the lower capacitor voltage $V_{ON}$ with and without the voltage balancing loop are depicted by different line types. As shown in FIG. 8D, the system is symmetric and works as an ideal LCL-T converter with the closed loop control scheme from FIG. 7, until time t1. At time t2, the control signal of the inverter switch $S_{4,inv}$ has an additional propagation delay added to it. The upper capacitor voltage $V_{PO}$ and the lower capacitor voltage $V_{ON}$ start diverging as seen from the time domain plots after time t2. At time t3, the balancing loop is engaged which provides the necessary feedback, i.e., second phase shift $\Delta\emptyset$ to balance the DC bus voltages. At time t4, the control signal of the inverter switch $S_{4,inv}$ gating delay in the system is removed and the balancing algorithm is disabled.

The following introduces the soft start control implemented by the converter system 1 shown in FIG. 6A, which the rectifier 4 of the converter system 1 is a full bridge (FB) rectifier. In another embodiment, the soft start control may be implemented by the converter system 1a shown in FIG. 8A, which the rectifier 4 of the converter system 1a is a stacked half bridge (SHB) rectifier. The primary focus of the soft start control is to pre-charge the voltage $V_{CB1}$ of the blocking capacitor $C_{B1}$ to half of the input voltage i.e., $V_{dc}/2$ prior to the closed loop control mentioned above. This guarantees that the inrush current through inverter end is minimized and the peak magnetizing current through the transformer 31 of the circuit 3 is limited.

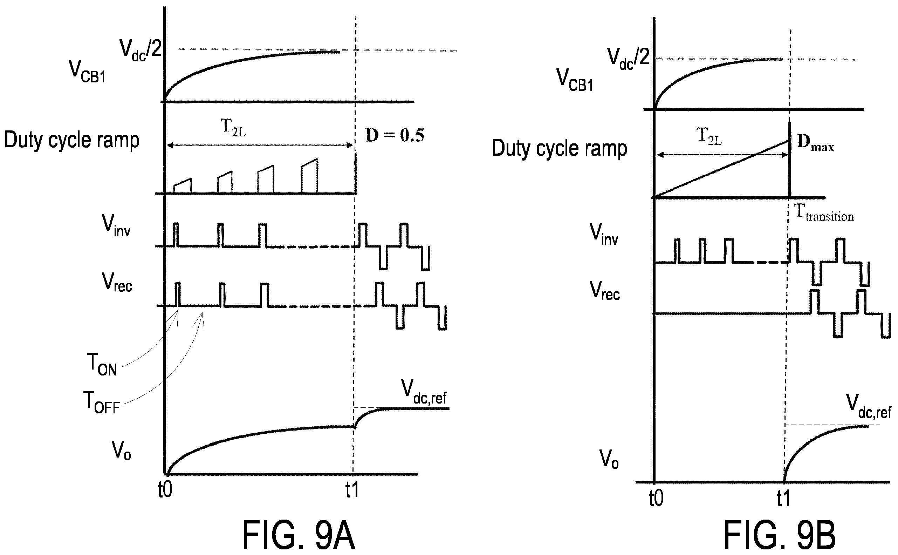

There are two approaches of the soft start control. In the first approach, shown in FIG. 9A, wherein the output voltage Vo of the output capacitor Co and the blocking capacitor $C_{B1}$ are charged simultaneously. During the soft start control (time t0 to t1), the two-level duty cycle ramp increases from 0 to 50%. In this two-level duty mode, we gradually turn on the inverter switches $S_{1,inv}$ and $S_{4,inv}$ together for time $T_{ON}$ and then turn off the inverter switches $S_{1,inv}$ and $S_{4,inv}$ for time $T_{OFF}$. The operation of the inverter switches $S_{2,inv}$ and $S_{3,inv}$ would be the complementary of the operation of the inverter switches $S_{1,inv}$ and $S_{4,inv}$ during this phase. Similarly, in this two-level duty mode, we gradually turn on the rectifier switches $S_{1,rec}$ and $S_{4,rec}$ together for time $T_{ON}$ and then turn on the rectifier switches $S_{1,rec}$ and $S_{4,rec}$ for time $T_{OFF}$. The operation of the rectifier switches $S_{2,rec}$ and $S_{3,rec}$ would be the complementary of the operation of the rectifier switches $S_{1,rec}$ and $S_{4,rec}$ during this phase. The inverter and rectifier output voltages $V_{inv}$ and $V_{rec}$ would have similar profiles with time $T_{ON}$ and time $T_{OFF}$ as shown in FIG. 9A.

The two-level duty cycle ramp increases from 0 to 50% means that the duty cycle of the converter system 1 is increased from 0 to 0.5. To avoid saturating the transformer 31 of the circuit 3, a pulse skipping control is performed. In specific, in the pulse skipping control, the rectifier switches of the rectifier 4 are turned off momentarily and turned back on with certain duty cycle. This ensures that the charging and magnetizing current for the blocking capacitor $C_{B1}$ and the transformer 31 has enough time to freewheel through the inverter switches of the inverter 2, and the saturation of the transformer 31 is avoided. The voltage $V_{CB1}$ is charged to $V_{dc}/2$ at time t1. A two-level modulation is implemented until the voltage $V_{CB1}$ is charged to $V_{dc}/2$ at time t1. After time t1, the output voltage Vo is controlled to equal the reference voltage $V_{dc,ref}$.

FIG. 9A shows the duty cycle ramp with pulse skipping control, i.e., the inverter switches and the rectifier switches are alternately enabled and disabled. It can be seen that the pulse skipping control slows down the increase of output voltage Vo from time t0, and at the same time charge the voltage $V_{CB1}$ to $V_{dc}/2$.

Unlike the first approach shown in FIG. 9A, in the second approach shown in FIG. 9B, the output voltage Vo of the output capacitor Co and the blocking capacitor $C_{B1}$ are charged separately. At first, the voltage $V_{CB1}$ of the blocking capacitor $C_{B1}$ is charged using a duty cycle ramp which increases from 0 to 50% without the need for pulse skipping control. During time t0 to t1, the secondary winding of the transformer 31 is shorted by either turning on the rectifier switches $S_{2,rec}$ and $S_{4,rec}$ or turning on the rectifier switches $S_{1,rec}$ and $S_{3,rec}$. Therefore, during time t0 to t1, no energy is delivered to the output capacitor Co, and the output voltage Vo remains zero. That limits the magnetizing component across the transformer 31, and the components $D_{max}$ and $T_{2L}$ must be tuned either through simulations or using closed loop feedback control. The voltage $V_{CB1}$ of blocking capacitor $C_{B1}$ is measured and compared against a reference value. When the voltage $V_{CB1}$ reaches the desired setting, i.e., $V_{dc/2}$, the transition to three-level mode begins. The three-level modulation is similar to the modulation shown in FIG. 8B. Once the voltage $V_{CB1}$ of the blocking capacitor $C_{B1}$ is charged to $V_{dc}/2$, the control of output voltage Vo is started which automatically pre-charges the output capacitor Co. That is, the output voltage Vo is increased from 0 to $V_{dc,ref}$ after time t1. The transition instant from two-level modulation to three-level modulation is obtained through simulation. The transition point is critical to ensure minimal inrush current. Specifically, the slew rate of the duty cycle ramp is ensured to be very slow to allow minimize the transformer DC bias component.

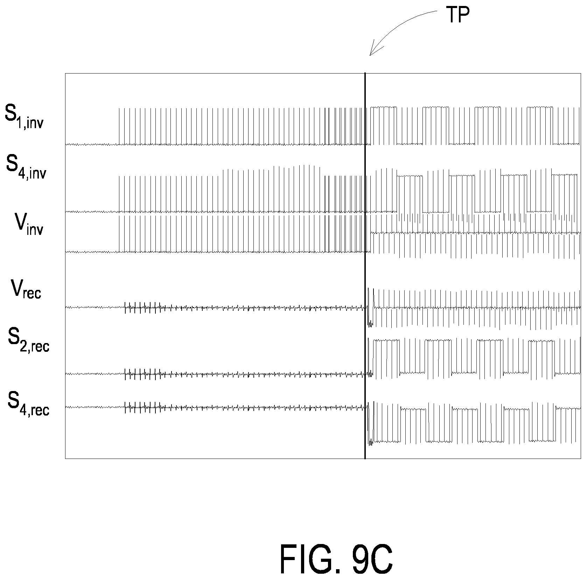

FIG. 9C schematically shows the sequence of events through a detailed timing diagram for the second approach of the FIG. 9B. To get the zero voltage level on the rectifier input, the control signal of the rectifier switch $S_{2,rec}$ and the control signal of the rectifier switch $S_{4,rec}$ will be shorted until a transition point TP is met. After the transition point TP is achieved, the three-level modulation will start where the total phase shift of $\emptyset + \Delta\emptyset$ will be used to control and balance the output current and input capacitor voltages respectively.

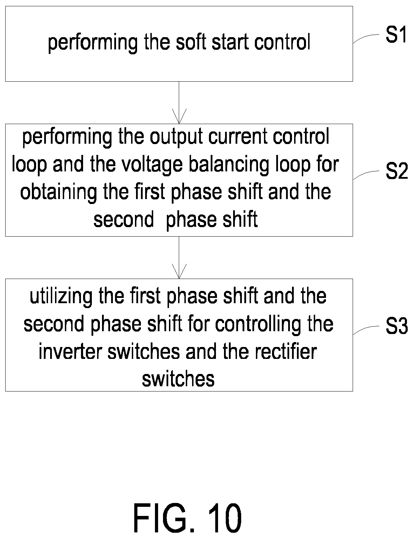

FIG. 10 is a schematic flow chart illustrating a control method of a converter system according to an embodiment of the present disclosure. The control method for a converter system of the present disclosure is applicable for the converter system 1 stated above. Please refer to FIG. 10, the control method of the present disclosure includes steps S1, S2 and S3. In the step S1, the soft start control is performed by the controller 5 until the blocking capacitor voltage $V_{CB1}$ reaches $V_{dc}/2$. In the step S2, the output current control loop and the voltage balancing loop are performed for obtaining the first phase shift and the second phase shift by the controller 5. In the step S3, the first phase shift and the second phase shift are utilized for controlling the inverter switches and the rectifier switches.

Prior to enabling the pre-charge control for DC link capacitor using closed loop battery control block, i.e., the transition point TP in FIG. 9C, the phase shift control variable is initialized to $180^0$. At the same time, the extended period doubling mode is enabled. After time $T_{transition}$, the closed loop DC bus control is enabled wherein both inverter and rectifier are switching with three-level modulation to control the battery input current $i_{BATT}$. The rectifier is phase shifted with respect to inverter to ensure ZVS as mentioned earlier in FIG. 6A, while the inverter phase shifted voltage decides the battery current.

From the above descriptions, the present disclosure provides a converter system and a control method thereof, in the present disclosure, the soft start control scheme for battery current control and DC bus voltage balancing of a three-element resonant converter is provided. Specifically, a soft-start strategy is disclosed that avoids inrush current and transformer saturation during power up phase. A complete closed loop control architecture that includes: a) soft start control scheme; b) output current control loop and voltage balancing loop are disclosed, enabling the converter to operate with zero voltage-switching across wide voltage/power range.

**Claims**

1. A converter system (1, 1a) for delivering energy from a DC voltage source ($V_{dc}$) to a load ($V_{batt}$), **characterized in that** the converter system (1, 1a) comprises:

   an inverter (2), comprising a plurality of inverter switches ($S_{1,inv}$, $S_{2,inv}$, $S_{3,inv}$, $S_{4,inv}$), a voltage source terminal for connecting to the DC voltage source ($V_{dc}$), and an inverter output terminal, wherein the plurality of inverter switches ($S_{1,inv}$, $S_{2,inv}$, $S_{3,inv}$, $S_{4,inv}$) comprises a first switch ($S_{1,inv}$), a second switch ($S_{2,inv}$), a third switch ($S_{3,inv}$), and a fourth switch ($S_{4,inv}$) electrically connected in series, and the inverter (2) has a first node (A) between the first switch ($S_{1,inv}$) and the second switch ($S_{2,inv}$), a second node (B) between the third switch ($S_{3,inv}$) and the fourth switch ($S_{4,inv}$), and a third node (C) between the second switch ($S_{2,inv}$) and the third switch ($S_{3,inv}$);
   a first capacitor ($C_1$) and a second capacitor ($C_2$), electrically connected in series to form a bridge arm electrically connected in parallel to the inverter (2), wherein a fourth node (O) between the first capacitor ($C_1$) and the second capacitor ($C_2$) is electrically connected to the third node (C), an upper capacitor voltage ($V_{PO}$) is across the first capacitor ($C_1$), and a lower capacitor voltage ($V_{ON}$) is across the second capacitor ($C_2$);
   a circuit (3), comprising a resonant network (30) and a transformer (31) electrically connected to each other, and electrically connected to the inverter output terminal;
   a blocking capacitor ($C_{B1}$), electrically connected between the inverter (2) and the resonant network (30);
   a rectifier (4), electrically connected to the circuit (3), wherein the rectifier (4) comprises a plurality of rectifier switches ($S_{1,rec}$, $S_{2,rec}$, $S_{3,rec}$, $S_{4,rec}$) and a converter output terminal, and a battery input current ($i_{BATT}$) flows through the converter output terminal;

an output capacitor ($C_O$), electrically connected in parallel to the rectifier (4); and

a controller (5), operably connected to the plurality of inverter switches ($S_{1,inv}$, $S_{2,inv}$, $S_{3,inv}$, $S_{4,inv}$) and operably connected to the plurality of rectifier switches ($S_{1,rec}$, $S_{2,rec}$, $S_{3,rec}$, $S_{4,rec}$),

wherein the controller (5) is configured to perform an output current control loop and a voltage balancing loop of the converter system (1, 1a), the controller (5) is configured to generate a first phase shift ($\emptyset$) based on the battery input current ($i_{BATT}$) in the output current control loop, and the controller (5) is configured to generate a second phase shift ($\Delta\emptyset$) based on the upper and lower capacitor voltages ($V_{PO}$, $V_{ON}$) in the voltage balancing loop,

wherein the controller (5) is configured to control the control signals of the first switch ($S_{1,inv}$) and the fourth switch ($S_{4,inv}$) of the plurality of inverter switches ($S_{1,inv}$, $S_{2,inv}$, $S_{3,inv}$, $S_{4,inv}$) to be phase-shifted by a summation or a difference of the first phase shift ($\emptyset$) and the second phase shift ($\Delta\emptyset$),

wherein the controller (5) is configured for performing a soft start control of the converter system (1, 1a), and in the soft start control, a voltage ($V_{CB1}$) of the blocking capacitor ($C_{B1}$) is controlled to be from zero to half of an input voltage of the converter system (1, 1a).

2. The converter system (1, 1a) according to claim 1, wherein in the output current control loop, the controller (5) is configured to compare a reference battery current with the battery input current ($i_{BATT}$) to generate an error signal, and the error signal is fed as an input to a proportional and integration controller (53) of the controller (5) to generate the first phase shift ($\emptyset$).

3. The converter system (1, 1a) according to claim 1, wherein in the voltage balancing loop, a proportional controller (51) of the controller (5) is configured to receive the upper and lower capacitor voltages ($V_{PO}$, $V_{ON}$) and generate the second phase shift ($\Delta\emptyset$) according to the upper and lower capacitor voltages ($V_{PO}$, $V_{ON}$).

4. A converter system (1, 1a) for delivering energy from a DC voltage source ($V_{dc}$) to a load ($V_{batt}$), **characterized in that** the converter system (1, 1a) comprises:

an inverter (2), comprising a plurality of inverter switches ($S_{1,inv}$, $S_{2,inv}$, $S_{3,inv}$, $S_{4,inv}$), a voltage source terminal for connecting to the DC voltage source ($V_{dc}$), and an inverter output terminal, wherein the plurality of inverter switches ($S_{1,inv}$, $S_{2,inv}$, $S_{3,inv}$, $S_{4,inv}$) comprises a first switch ($S_{1,inv}$), a second switch ($S_{2,inv}$), a third switch ($S_{3,inv}$), and a fourth switch ($S_{4,inv}$) electrically connected in series, the inverter (2) has a first node (A) between the first switch ($S_{1,inv}$) and the second switch ($S_{2,inv}$), a second node (B) between the third switch ($S_{3,inv}$) and the fourth switch ($S_{4,inv}$), and a third node (C) between the second switch ($S_{2,inv}$) and the third switch ($S_{3,inv}$);

a first capacitor ($C_1$) and a second capacitor ($C_2$), electrically connected in series to form a bridge arm electrically connected in parallel to the inverter (2), wherein a fourth node (O) between the first capacitor ($C_1$) and the second capacitor ($C_2$) is electrically connected to the third node (C), an upper capacitor voltage ($V_{PO}$) is across the first capacitor ($C_1$), and lower capacitor voltage ($V_{ON}$) is across the second capacitor ($C_2$);

a circuit (3), comprising a resonant network (30) and a transformer (31) electrically connected to each other, and electrically connected to the inverter output terminal;

a blocking capacitor ($C_{B1}$), electrically connected between the inverter (2) and the resonant network (30);

a rectifier (4), electrically connected to the circuit (3), wherein the rectifier (4) comprises a plurality of rectifier switches ($S_{1,rec}$, $S_{2,rec}$, $S_{3,rec}$, $S_{4,rec}$) and a converter output terminal;

an output capacitor ($C_O$), electrically connected in parallel to the rectifier (4); and

a controller (5), operably connected to the plurality of inverter switches ($S_{1,inv}$, $S_{2,inv}$, $S_{3,inv}$, $S_{4,inv}$) and operably connected to the plurality of rectifier switches ($S_{1,rec}$, $S_{2,rec}$, $S_{3,rec}$, $S_{4,rec}$),

wherein the controller (5) is configured for performing a soft start control of the converter system (1, 1a), and in the soft start control, a voltage ($V_{CB1}$) of the blocking capacitor ($C_{B1}$) is controlled to be half of an input voltage of the converter system (1, 1a).

5. The converter system (1, 1a) according to any one of the above claims, wherein in the soft start control, the output capacitor ($C_O$) and the blocking capacitor ($C_{B1}$) are charged simultaneously.

6. The converter system (1, 1a) according to any one of the above claims, wherein in the soft start control, the output capacitor ($C_O$) and the blocking capacitor ($C_{B1}$) are charged separately.

7. The converter system (1, 1a) according to any one of the above claims, wherein the rectifier (4) comprises a full bridge rectifier or a stacked half bridge rectifier.

8. The converter system (1, 1a) according to any one of the above claims, wherein the first switch ($S_{1,inv}$) and the fourth switch ($S_{4,inv}$) of the plurality of inverter switches ($S_{1,inv}$, $S_{2,inv}$, $S_{3,inv}$, $S_{4,inv}$) are phase-shifted by the summation of the first phase shift and the second phase shift when the upper capacitor voltage ($V_{PO}$) is greater than the lower capacitor voltage ($V_{ON}$).

9. The converter system (1, 1a) according to any one of the above claims, wherein the first switch ($S_{1,inv}$) and the fourth switch ($S_{4,inv}$) of the plurality of inverter switches ($S_{1,inv}$, $S_{2,inv}$, $S_{3,inv}$, $S_{4,inv}$) are phase-shifted by the difference of the first phase shift and the second phase shift when the upper capacitor voltage ($V_{PO}$) is less than the lower capacitor voltage ($V_{ON}$).

10. The converter system (1, 1a) according to any one of the above claims, wherein in the soft start control, operations of the second switch ($S_{2,inv}$) and the third switch ($S_{3,inv}$) of the inverter are complementary to operations of the first switch ($S_{1,inv}$) and the fourth switch ($S_{4,inv}$) of the inverter.

11. A control method of a converter system (1, 1a), wherein the converter system (1, 1a) is configured for delivering energy from a DC voltage source ($V_{dc}$) to a load ($V_{batt}$) and comprises an inverter (2), a first capacitor ($C_1$), a second capacitor ($C_2$), a circuit (3), a blocking capacitor ($C_{B1}$), a rectifier (4), an output capacitor ($C_o$) and a controller (5); the inverter (2) comprises a plurality of inverter switches ($S_{1,inv}$, $S_{2,inv}$, $S_{3,inv}$, $S_{4,inv}$), a voltage source terminal for connecting to the DC voltage source ($V_{dc}$), and an inverter output terminal, the plurality of inverter switches ($S_{1,inv}$, $S_{2,inv}$, $S_{3,inv}$, $S_{4,inv}$) comprises a first switch ($S_{1,inv}$), a second switch ($S_{2,inv}$), a third switch ($S_{3,inv}$) and a fourth switch ($S_{4,inv}$) electrically connected in series, and the inverter (2) has a first node (A) between the first switch ($S_{1,inv}$) and the second switch ($S_{2,inv}$), a second node (B) between the third switch ($S_{3,inv}$) and the fourth switch ($S_{4,inv}$), and a third node (C) between the second switch ($S_{2,inv}$) and the third switch ($S_{3,inv}$); the first capacitor ($C_1$) and the second capacitor ($C_2$) are electrically connected in series to form a bridge arm electrically connected in parallel to the inverter (2), a fourth node (O) between the first capacitor ($C_1$) and the second capacitor ($C_2$) is electrically connected to the third node (C), an upper capacitor voltage ($V_{PO}$) is across the first capacitor ($C_1$), and a lower capacitor voltage ($V_{ON}$) is across the second capacitor ($C_2$); the circuit (3) comprises a resonant network (30) and a transformer (31) electrically connected to each other and is electrically connected to the inverter output terminal; the blocking capacitor ($C_{B1}$) is electrically connected between the inverter (2) and the resonant network (30); the rectifier (4) is electrically connected to the circuit (3), the rectifier (4) comprises a plurality of rectifier switches ($S_{1,rec}$, $S_{2,rec}$, $S_{3,rec}$, $S_{4,rec}$) and a converter output terminal, and a battery input current ($i_{BATT}$) flows through the converter output terminal; the output capacitor ($C_o$) is electrically connected in parallel to the rectifier (4); the controller (5) is operably connected to the plurality of inverter switches ($S_{1,inv}$, $S_{2,inv}$, $S_{3,inv}$, $S_{4,inv}$) and is operably connected to the plurality of rectifier switches ($S_{1,rec}$, $S_{2,rec}$, $S_{3,rec}$, $S_{4,rec}$),

    **characterized in that** the control method comprises steps of:

    (a) performing a soft start control by the controller (5) until a voltage ($V_{CB1}$) of the blocking capacitor ($C_{B1}$) reaches half of a voltage of the DC voltage source ($V_{dc}$);
    (b) performing an output current control loop and a voltage balancing loop for obtaining a first phase shift (Ø) and a second phase shift (ΔØ) by the controller (5); and
    (c) utilizing the first phase shift (Ø) and the second phase shift (ΔØ) for controlling the plurality of inverter switches ($S_{1,inv}$, $S_{2,inv}$, $S_{3,inv}$, $S_{4,inv}$) and the plurality of rectifier switches ($S_{1,rec}$, $S_{2,rec}$, $S_{3,rec}$, $S_{4,rec}$).

12. The control method according to claim 11, wherein in the output current control loop, the controller (5) compares a reference battery current with the battery input current ($i_{BATT}$) to generate an error signal, and the error signal is fed as an input to a proportional and integration controller (53) of the controller (5) which generates the first phase shift (Ø).

13. The control method according to claim 11 or 12, wherein in the voltage balancing loop, a proportional controller (51) of the controller (5) receives the upper and lower capacitor voltages ($V_{PO}$, $V_{ON}$) and generates the second phase shift (ΔØ) according to the upper and lower capacitor voltages ($V_{PO}$, $V_{ON}$).

14. The control method according to any one of claims 11 to 13, wherein in the soft start control, the output capacitor ($C_o$) and the blocking capacitor ($C_{B1}$) are charged simultaneously.

15. The control method according to any one of claims 11 to 13, wherein in the soft start control, the output capacitor ($C_o$) and the blocking capacitor ($C_{B1}$) are charged separately.

## FIG. 1 PRIOR ART

FIG. 2A PRIOR ART

EP 4 664 742 A1

FIG. 2B PRIOR ART

FIG. 3A PRIOR ART

FIG. 3B PRIOR ART

FIG. 4 PRIOR ART

EP 4 664 742 A1

FIG. 5 PRIOR ART

FIG. 6A

FIG. 6B

FIG. 7

EP 4 664 742 A1

1a

$i_{BATT}$    $V_{batt}$

$C_O$

$S_{1,rec}$   D   $S_{2,rec}$   $S_{3,rec}$   E   $S_{4,rec}$

4

31

3   $L_2$   $C_r$   30

2   $C_{B1}$   $L_1$

$S_{1,inv}$   A   $S_{2,inv}$   $i_{NP}$   C   $S_{3,inv}$   B   $S_{4,inv}$

P   $C_1$   O   $C_2$   N

$V_{dc}$

5   51 proportional controller   52 Adder   53 PI controller   controller

FIG. 8A

EP 4 664 742 A1

$T_{SW}$ $T_{SW}$

$S_{1,inv}$ $S_{1,inv}$

$S_{2,inv}$ $S_{2,inv}$

$S_{4,inv}$ $S_{4,inv}$

$S_{3,inv}$ $S_{3,inv}$

$V_{inv}$

$V_{rec}$

$i_{NP}$

$|\varnothing|$

FIG. 8B

FIG. 8C

FIG. 8D

EP 4 664 742 A1

FIG. 9A

FIG. 9B

EP 4 664 742 A1

FIG. 9C

```
┌─────────────────────────────────────┐
│                                     │
│   performing the soft start control │──── S1
│                                     │
└─────────────────────────────────────┘
                   │
                   ▼
┌─────────────────────────────────────┐
│  performing the output current      │
│  control loop and the voltage       │
│  balancing loop for                 │──── S2
│  obtaining the first phase shift     │
│  and the second  phase shift        │
└─────────────────────────────────────┘
                   │
                   ▼
┌─────────────────────────────────────┐
│  utilizing the first phase shift     │
│  and the second phase shift for      │
│  controlling the                     │──── S3
│  inverter switches and the rectifier │
│  switches                            │
└─────────────────────────────────────┘
```

FIG. 10

Europäisches
Patentamt

European
Patent Office

Office européen
des brevets

# EUROPEAN SEARCH REPORT

**Application Number**

EP 25 18 2041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU CHI ET AL: "Duty cycle-based start-up control for a ZVS bidirectional DC-DC converter", 2014 IEEE ENERGY CONVERSION CONGRESS AND EXPOSITION (ECCE), IEEE, 14 September 2014 (2014-09-14), pages 3046-3050, XP032680637, DOI: 10.1109/ECCE.2014.6953814 [retrieved on 2014-11-11] | 4,7,10 | INV. H02M1/36 H02M3/00 H02M3/335 H02M7/483 |
| Y | * abstract * * Section III. DUTY CYCLE-BASED START-UP CONTROL; figures 1, 3, 6 * | 1-3,5,6, 8,9, 11-15 | |
| Y | EP 3 787 171 A1 (DELTA ELECTRONICS INC [TW]) 3 March 2021 (2021-03-03) | 1-3,5,6, 8,9, 11-15 | |
| A | * abstract * * paragraph [0063]; figures 10B, 11, 16A * | 4,7,10 | |
| A | EP 3 972 104 A1 (INFINEON TECHNOLOGIES AUSTRIA AG [AT]) 23 March 2022 (2022-03-23) * abstract * * paragraph [0004]; figure 5 * | 1-15 | **TECHNICAL FIELDS SEARCHED (IPC)** H02M |
| A | ZHANG CHI ET AL: "DC-link Capacitor Voltage Balancing Control for Series Half Bridge LLC Resonant Converter", 2020 IEEE APPLIED POWER ELECTRONICS CONFERENCE AND EXPOSITION (APEC), IEEE, 15 March 2020 (2020-03-15), pages 2163-2169, XP033785028, DOI: 10.1109/APEC39645.2020.9124510 [retrieved on 2020-06-23] * abstract; figures 1, 4, 5, 6 * | 1-15 | |

-/--

The present search report has been drawn up for all claims

| Place of search | Date of completion of the search | Examiner |
|---|---|---|
| The Hague | 29 September 2025 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches Patentamt European Patent Office Office européen des brevets | **EUROPEAN SEARCH REPORT** | **Application Number** EP 25 18 2041 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 304 069 A1 (DELTA ELECTRONICS INC [TW]) 10 January 2024 (2024-01-10) * abstract * * paragraphs [0040], [0054]; figures 1A, 1B, 3B, 12 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 29 September 2025 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 18 2041

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2025

| Patent document cited in search report | | Publication date | Patent family member(s) | | Publication date |
|---|---|---|---|---|---|
| EP 3787171 | A1 | 03-03-2021 | CN | 112511007 A | 16-03-2021 |
| | | | EP | 3787171 A1 | 03-03-2021 |
| | | | ES | 2934607 T3 | 23-02-2023 |
| | | | JP | 6942852 B2 | 29-09-2021 |
| | | | JP | 2021035328 A | 01-03-2021 |
| | | | TW | 202116003 A | 16-04-2021 |
| | | | US | 2021067045 A1 | 04-03-2021 |
| EP 3972104 | A1 | 23-03-2022 | CN | 114257093 A | 29-03-2022 |
| | | | EP | 3972104 A1 | 23-03-2022 |
| | | | US | 2022094271 A1 | 24-03-2022 |
| EP 4304069 | A1 | 10-01-2024 | CN | 117375427 A | 09-01-2024 |
| | | | EP | 4304069 A1 | 10-01-2024 |
| | | | TW | 202404242 A | 16-01-2024 |
| | | | US | 2024014743 A1 | 11-01-2024 |

EPO FORM P0459

For more details about this annex : see Official Journal of the European Patent Office, No. 12/82